# EUROPEAN PATENT SPECIFICATION

(11) **EP 3 118 847 B1**
(45) Date of publication and mention of the grant of the patent: **08.11.2023**
(21) Application number: 16163299.7
(22) Date of filing: 31.03.2016
(51) Int. Cl.: G09G 5/02, G09G 3/20, G09G 3/36

(54) **IMAGE DISPLAYING METHOD, IMAGE DISPLAYING DEVICE, COMPUTER PROGRAM AND RECORDING MEDIUM**
BILDANZEIGEVERFAHREN, BILDANZEIGEVORRICHTUNG, COMPUTERPROGRAMM UND AUFZEICHNUNGSMEDIUM
PROCÉDÉ D'AFFICHAGE D'IMAGE, DISPOSITIF D'AFFICHAGE D'IMAGE, PROGRAMME INFORMATIQUE ET SUPPORT D'ENREGISTREMENT

(30) Priority: 17.07.2015 CN 201510424387
(43) Date of publication of application: 18.01.2017
(73) Proprietor: Xiaomi Inc., Beijing 100085 (CN)
(72) Inventor: XU, Chao, 100085 BEIJING (CN); WANG, Xingmin, 100085 BEIJING (CN); TAN, Kangxi, 100085 BEIJING (CN)
(74) Representative: Cabinet Beau de Loménie

(56) References cited:
- US-A1- 2005 265 628
- US-A1- 2008 100 870

## Description

### TECHNICAL FIELD

The present invention relates to the technical field of communications and, more particularly, to an image displaying method, an image displaying device, a computer program and a recording medium.

### BACKGROUND

LCD panels may be divided into two types in terms of display technology: hard screens and soft screens. Soft screens, which mainly refer to VA (Vertical Alignment) -type panels, are characterized in that, when a soft screen is touched by a hand, a water ripple effect will appear on the soft screen.

Owing to poor display performance of some soft screens, when an image is displayed using such a soft screen, similar colors in the image may be displayed as one color. Accordingly, some regions of transitional colors are lost from regions of similar colors in the image, making it look unnatural. For example, it is assumed that a region B in an image A is a red region, from left to right the color of the red region B gradually changes to dark red from light red and the change of color in the red region B is smooth. However, owing to poor performance of some soft screens, sharp change of color occurs when such a soft screen displays the red region B of the image A. That is, such a soft screen will display the original red region B in the image A where the change of color is gradual and smooth as a red region B where the change of color is sharp and remarkable.

Therefore, in the above related technology, some soft screens with poor performance will display an image containing similar colors as an image of the same color. Accordingly, sharp change of color occurs and the image looks unnatural.

US2005265628 relates to a false contour reduction device, display device, false contour reduction method, and false contour reduction program. US2008100870 relates to an image processor, and particularly to an image processor which prevents that when color image data is outputted as a monochrome image, the outputted monochrome image becomes unrecognizable or difficult to recognize.

### SUMMARY

This Summary is provided to introduce a selection of concepts in a simplified form that are further described below in the Detailed Description. This Summary is not intended to identify key features or essential features of the claimed subject matter.

In order to overcome problems with the related technology, the invention provides an image displaying method, an image displaying device, a computer program and a recording medium, whereby no sharp change of color occurs when a soft screen with poor performance displays regions of similar colors in an image.

According to a first aspect of embodiments of the present invention, there is provided an image displaying method as recited in appended claim 1.

According to a second aspect of embodiments of the present invention, there is provided an image displaying device as recited in appended claim 3.

Additional preferred embodiments are set out in the dependent claims.

The technical solutions according to the embodiments of the present invention can achieve the following advantageous effect. In the solutions according to the invention, before a designated image is displayed, an image region composed of at least three monochrome regions in the designated image is determined. When it is determined that a difference in color value between each two adjacent ones of the adjoining monochrome regions in the image region is less than a threshold value, it indicates that the adjoining monochrome regions in the image region have similar colors. In order to avoid sharp change of color when a soft screen with poor performance displays the monochrome regions of the image region in the designated image, color values of the monochrome regions in the image region are used to determine a target color value in accordance with a preset scheme, so as to generate and display a target image in which the color value of the image region is the target color value, thereby guaranteeing that no sharp change of color occurs when the target image is displayed.

It should be understood that the general description above and the detailed description below are merely illustrative rather than limitative.

### BRIEF DESCRIPTION OF THE DRAWINGS

Accompanying drawings herein are incorporated into the specification as a part of it, for illustrating embodiments according to the present invention and for explaining principles of the present invention together with the description.
Fig. 1 is a flowchart showing an image displaying method not claimed in the present application but helpful for understanding the invention.
Fig. 2 is a flowchart showing another image displaying method not claimed in the present application but helpful for understanding the invention.
Fig. 3 is a flowchart showing a further image displaying method not claimed in the present application but helpful for understanding the invention.
Fig. 4 is a flowchart showing an image displaying method according to an exemplary embodiment.
Fig. 5 is a schematic diagram showing an image displaying device not claimed in the present application but helpful for understanding the invention.
Fig. 6 is a schematic diagram showing another image displaying device not claimed in the present application but helpful for understanding the invention.
Fig. 7 is a schematic diagram showing a further image displaying device not claimed in the present application but helpful for understanding the invention.
Fig. 8 is a schematic diagram showing an image displaying device according to an exemplary embodiment.
Fig. 9 is a schematic diagram showing a further image displaying device not claimed in the present application but helpful for understanding the invention.
Fig. 10 is a schematic diagram showing a further image displaying device not claimed in the present application but helpful for understanding the invention.
Fig. 11 is a block diagram showing an image displaying device according to an exemplary embodiment.

### DETAILED DESCRIPTION

Here, detailed description will be given of various methods and devices, as well as exemplary embodiments of the invention, which are illustrated in the accompanying drawings. In the following description, when the accompanying drawings are referred to, like numbers in different drawings represent like elements unless otherwise specified. Implementations described in the following exemplary embodiments are not all possible implementations. Instead, they are merely examples of devices and methods according to certain aspects of the invention as recited in the appended claims.

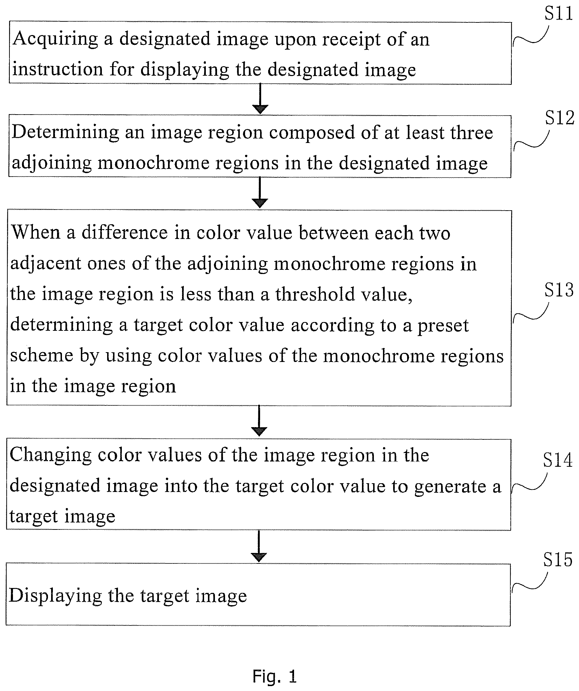

Fig. 1 is a flowchart showing an image displaying method not claimed in the present application but helpful for understanding the invention. The image displaying method as shown in Fig. 1 is applicable to a smart device (i.e. it may be implemented by a smart device). The image displaying method can prevent sharp change of color while a soft screen with poor performance displays regions of similar colors in an image. The method comprises the following steps.

In step S11, a designated image is acquired upon receipt of an instruction for displaying the designated image.

Here, the method is applicable to a smart device having a screen, such as a smart TV, a smart mobile phone, a tablet computer or a smart watch.

To view a designated image stored in a smart device, a user needs to input an instruction for displaying the designated image onto the smart device. Upon receipt of the instruction for displaying the designated image, the smart device reads from its hard disk the designated image stored previously.

In step S12, an image region composed of at least three adjoining monochrome regions in the designated image is determined.

Here, a monochrome region is composed of a plurality of pixels having the same color value and located at adjoining positions. The color value can be expressed in RGB system. For example, it is assumed that the monochrome region is composed of 6 pixels arranged in 2 lines and 3 columns and the 6 pixels in 2 lines and 3 columns are all pure red, namely, the color value of these 6 pixels is RGB (255, 0, 0).

An image region is composed of at least three monochrome regions. For example, it is assumed that an image region A includes 4 adjoining monochrome regions. The first monochrome region is composed of 6 pixels in 2 lines and 3 columns and the 6 pixels in 2 lines and 3 columns are all pure red, namely, the color value of these 6 pixels is RGB (255, 0, 0). The second monochrome region is composed of 4 pixels in 2 lines and 2 columns and the 4 pixels in 2 lines and 2 columns are all red, namely, the color value of the 4 pixels is RGB (240, 0, 0). The third monochrome region is composed of 4 pixels in 2 lines and 2 columns and the 4 pixels in 2 lines and 2 columns are all red, namely, the color value of the 4 pixels is RGB (230, 0, 0). The fourth monochrome region is composed of 6 pixels in 2 lines and 3 columns and the 6 pixels in 2 lines and 3 columns are all red, namely, the color value of the 6 pixels is RGB (220, 0, 0). Thus, the image region A is composed of the above 4 adjoining monochrome regions and includes a total of 20 pixels.

After the smart device acquires the designated image, the smart device may determine an image region composed of at least three adjoining monochrome regions in the designated image. After determining the image region composed of at least three adjoining monochrome regions, the smart device acquires color values for the respective monochrome regions in the image region. For example, it is assumed that the image region A acquired by the smart device includes 4 adjoining monochrome regions, the color value of the first monochrome region is RGB (255, 0, 0), the color value of the second monochrome region is RGB (240, 0, 0), the color value of the third monochrome region is RGB (230, 0, 0) and the color value of the fourth monochrome region is RGB (220, 0, 0). Then, the smart device acquires the color values of these four monochrome regions respectively, which are RGB (255, 0, 0), RGB (240, 0, 0), RGB (230, 0, 0) and RGB (220, 0, 0) respectively.

In step S13, when a difference in color value between each two adjacent ones of the adjoining monochrome regions in the image region is less than a threshold value, a target color value is determined in accordance with a preset scheme by using color values of the monochrome regions in the image region.

Here, the threshold is a preset color value. For example, it is assumed that the threshold value is preset to RGB (20, 20, 20).

When the smart device determines the image region composed of at least three adjoining monochrome regions in the designated image, the smart device determines whether a difference in color value between each two adjacent ones of the adjoining monochrome regions in the image region is less than a threshold value. When the smart device determines that the difference in color value between each two adjacent ones of the adjoining monochrome regions in the image region is less than the threshold value, it indicates that the adjoining monochrome regions in the image region have similar color values. When displaying the designated image, some poor-performance soft screens may display some monochrome regions in the image region of the designated image in the same color, causing unsmooth color transition in the image region and sharp change of color.

Therefore, when the smart device determines that the difference in color value between each two adjacent ones of the adjoining monochrome region in the image region is less than the threshold value, the smart devices then determines a target color value by using color values of the monochrome regions in the image region, so as to guarantee that each of the monochrome regions in the image region adopts the target color value and accordingly avoid sharp change of color in the image region.

For instance, it is assumed that the threshold value is preset to RGB (20, 20, 20), the smart device determines an image region A composed of 6 adjoining monochrome regions in the designated image. The color value of the first monochrome region A1 is RGB (250, 0, 0). The color value of the second monochrome region A2 is RGB (240, 0, 0). The color value of the third monochrome region A3 is RGB (230, 0, 0). The color value of the fourth monochrome region is RGB (220, 0, 0). The color value of the fifth monochrome region is RGB (210, 0, 0). The color value of the sixth monochrome region is RGB (200, 0, 0). Furthermore, the first monochrome region A1, the second monochrome region A2, the third monochrome region A3, the fourth monochrome region A4, the fifth monochrome region A5 and the sixth monochrome region A6 are connected in turn. Then, the smart device may calculate a difference in color value between each two adjacent ones of adjoining monochrome regions in the image region and determine whether the difference is less than a threshold value of RGB (20, 20, 20). It is found through calculation that the difference in color value between each two adjacent monochrome regions in the image region A of the designated image is equal to RGB (10, 0, 0), which is less than the threshold value RGB (20, 20, 20). This means the adjoining monochrome regions in the image region have similar color values. When the designated image is displayed on some poor-performance soft screens, some monochrome regions in the image region of the designated image may be displayed in the same color, causing unsmooth color transition in the image region and sharp change of color. Therefore, the smart device determines the target color value in accordance with a preset scheme by using the color values of the monochrome regions in the image region, thereby guaranteeing that each monochrome region in the image region adopts the target color value and accordingly avoiding sharp change of color in the image region.

In addition, there is a plurality of implementations for determining the target color value in accordance with preset scheme by using the color values of the monochrome regions in the image region. In the following, two implementations will be described.

In the first implementation, the preset scheme is to calculate an average value of the color values of the monochrome regions in the image region and then determine the average value as the target color value.

In order to describe the first implementation more clearly, steps of the first implementation are briefly described below.

In the first step, the average value of the color values of the monochrome regions in the image region is calculated.

In the second step, the average value is determined as the target color value.

For example, it is assumed that the smart device determines an image region A composed of 6 adjoining monochrome regions in the designated image. The color value of the first monochrome region A1 is RGB (250, 0, 0). The color value of the second monochrome region A2 is RGB (240, 0, 0). The color value of the third monochrome region A3 is RGB (230, 0, 0). The color value of the fourth monochrome region is RGB (220, 0, 0). The color value of the fifth monochrome region is RGB (210, 0, 0). The color value of the sixth monochrome region is RGB (200, 0, 0). Then, the smart device starts to calculate an average value of the color values of the 6 adjoining monochrome regions in the image region A, which is [RGB (250, 0, 0) + (240, 0, 0) + RGB (230, 0, 0) + RGB (220, 0, 0) + RGB (210, 0, 0) + RGB (200, 0, 0)]/6= RGB (225, 0, 0). Finally, the smart device determines the average value RGB (225, 0, 0) as the target color value.

In the second implementation, the preset scheme consists in deriving the target color value from a maximal color value and a minimal color value in the image region and a preset coefficient.

In order to describe the second implementation more clearly, steps of the second implementation are briefly described below.

In the first step, the maximal color value and the minimal color value in the image region are acquired.

In the second step, a difference between the maximal color value and the minimal color value in the image region is calculated as a first color value.

In the third step, a product of the first color value and the preset coefficient is calculated as a second color value.

In the fourth step, a sum of the minimal color value and the second color value is calculated as the target color value.

For example, the preset coefficient is 0.6. It is assumed that the smart device determines an image region A composed of 6 adjoining monochrome regions in the designated image. The color value of the first monochrome region A1 is RGB (250, 0, 0). The color value of the second monochrome region A2 is RGB (240, 0, 0). The color value of the third monochrome region A3 is RGB (230, 0, 0). The color value of the fourth monochrome region is RGB (220, 0, 0). The color value of the fifth monochrome region is RGB (210, 0, 0). The color value of the sixth monochrome region is RGB (200, 0, 0). Then, the smart device starts to acquire the maximal color value RGB (250, 0, 0) and the minimal color value RGB (200, 0, 0) in the image region. Afterwards, a difference between the maximal color value RGB (250, 0, 0) and the minimal color value RGB (200, 0, 0) in the image region is calculated as a first color value which is RGB (250, 0, 0)-RGB (200, 0, 0) = RGB(50, 0, 0). Next, a product of the first color value RGB (50, 0, 0) and the preset coefficient 0.6 is calculated as the second color value which is RGB (50, 0, 0) ×0.6= RGB (30, 0, 0). Thereafter, a sum of the minimal color value RGB (200, 0, 0) and the second color value RGB (30, 0, 0) is calculated as the target color value which is RGB (200, 0, 0) +RGB (30, 0, 0)= RGB (230, 0, 0).

In step S14, color values of the image region in the designated image is changed into the target color value to generate a target image.

Here, after determining the target value from the color values of the monochrome region in the image region, the smart device changes the color values of the image region in the designated image into the target color value so as to generate a target image. The target image differs from the designated image in that the color value of the image region in the target image is the target color value. Other parts of the target image are same as those of the designated image.

In step S15, the target image is displayed.

Here, the smart device displays the target image on its display screen. Even if the display screen of the smart device is a poor-performance soft screen, no sharp change of color occurs when the target image is displayed.

In the method illustrated in Fig. 1, before a designated image is displayed, it is required to determine an image region composed of at least three monochrome regions in the designated image in advance. When it is determined that a difference in color value between each two adjacent ones of the adjoining monochrome regions in the image region is less than a threshold value, it indicates that the adjoining monochrome regions in the image region have similar colors. In order to avoid sharp change of color when a poor-performance soft screen displays the monochrome regions of the image region in the designated image, a target color value is determined in accordance with a preset scheme by using color values of the monochrome regions in the image region, so as to generate and display a target image in which the color value of the image region is the target color value, thereby guaranteeing that no sharp change of color occurs when the target image is displayed.

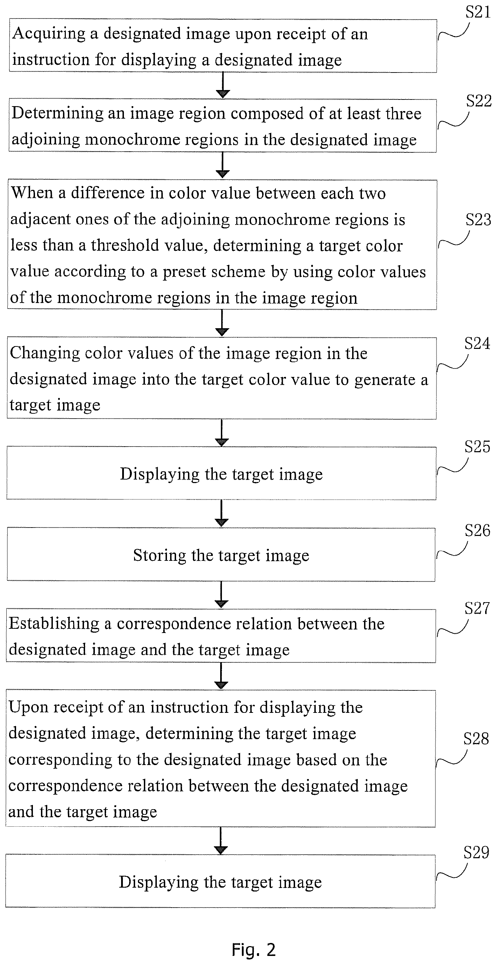

Fig. 2 is a flowchart showing another image displaying method not claimed in the present application but helpful for understanding the invention. The image displaying method as shown in Fig.2 is applicable to a smart device (i.e. may be implemented by a smart device). The method illustrated in Fig. 2 is a variant of the method illustrated in Fig. 1. For the same part of Fig. 2 as that of Fig. 1, description and explanation of the method illustrated in Fig. 1 can be referred to. The method shown in Fig. 2 comprises the following steps.

In Step S21, a designated image is acquired upon receipt of an instruction for displaying the designated image.

In step S22, an image region composed of at least three adjoining monochrome regions in the designated image is determined.

In step S23, when a difference in color value between each two adjacent ones of the adjoining monochrome regions in the image region is less than a threshold value, a target color value is determined in accordance with a preset scheme by using color values of the monochrome regions in the image region.

In step S24, color values of the image region in the designated image are changed into the target color value to generate a target image.

In step S25, the target image is displayed.

In step S26, the target image is stored.

Here, after displaying the target image on its display screen, the smart device can store the target image into its disk, so as to quickly determine the target image upon receipt of an instruction for displaying the designated image without having to repeat the above steps.

In step S27, a correspondence relation between the designated image and the target image is established.

Here, after the smart device has stored the target image, it also needs to determine a correspondence relation between the designated image and the target image. In accordance with the correspondence relation between the designated image and the target image, the smart device can quickly find the target image corresponding to the designated image from the disk upon receipt of an instruction for displaying the designated image and then display the target image. Accordingly, time can be saved.

In step S28, the target image corresponding to the designated image is determined based on the correspondence relation between the designated image and the target image upon receipt of an instruction for displaying the designated image.

In step S29, the target image is displayed.

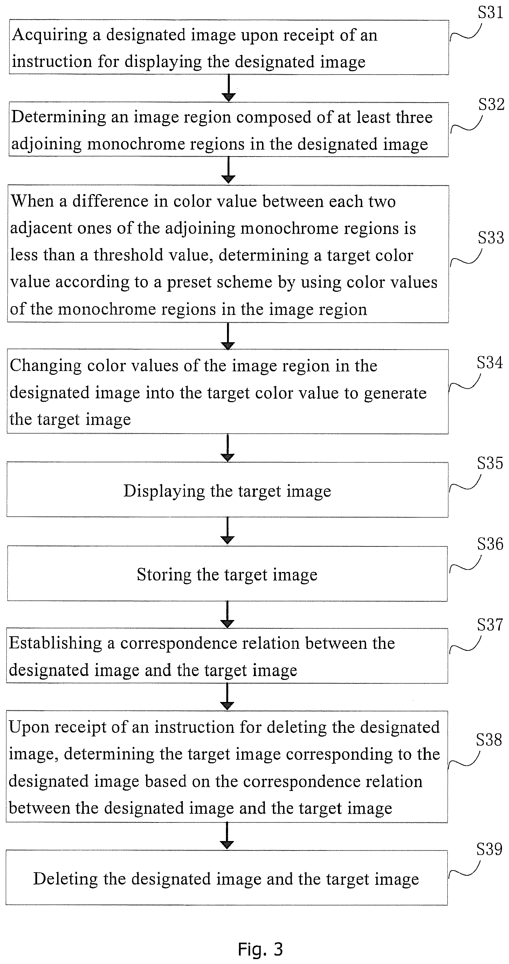

Fig. 3 is a flowchart showing a further image displaying method not claimed in the present application but helpful for understanding the invention. The image displaying method as shown in Fig. 3 is applicable to a smart device (i.e. may be implemented by a smart device). The method illustrated in Fig. 3 is a variant of the method illustrated in Fig. 1. For the same part of Fig. 3 as that of Fig. 1, description and explanation of the method illustrated shown in Fig. 1 can be referred to. The method shown in Fig. 3 comprises the following steps.

In Step S31, a designated image is acquired upon receipt of an instruction for displaying the designated image.

In step S32, an image region composed of at least three adjoining monochrome regions in the designated image is determined.

In step S33, when a difference in color value between each two adjacent ones of the adjoining monochrome regions in the image region is less than a threshold value, a target color value is determined in accordance with a preset scheme by using color values of the monochrome regions in the image region.

In step S34, color values of image region in the designated image are changed into the target color value to generate a target image.

In step S35, the target image is displayed.

In step S36, the target image is stored.

Here, after displaying the target image on its display screen, the smart device can store the target image into its disk, so as to quickly determine the target image upon receipt of the instruction for displaying the designated image without repeating the above steps.

In step S37, a correspondence relation between the designated image and the target image is established.

Here, after the smart device has stored the target image, it also needs to determine a correspondence relation between the designated image and the target image. In accordance with the correspondence relation between the designated image and the target image, the smart device can quickly find the target image corresponding to the designated image from the disk upon receipt of an instruction for deleting the designated image. Accordingly, time can be saved.

In step S38, the target image corresponding to the designated image is determined based on the correspondence relation between the designated image and the target image upon receipt of an instruction for deleting the designated image.

Here, when the smart device receives an instruction for deleting the designated image, it indicates that the user neither needs the designated image nor the target image. The smart device can determine the previously stored target image corresponding to the designated image based on the correspondence relation between the designated image and the target image.

In step S39, the designated image and the target image are deleted.

Here, after determining the target image corresponding to the designated image, the smart device can delete the designated image and the target image.

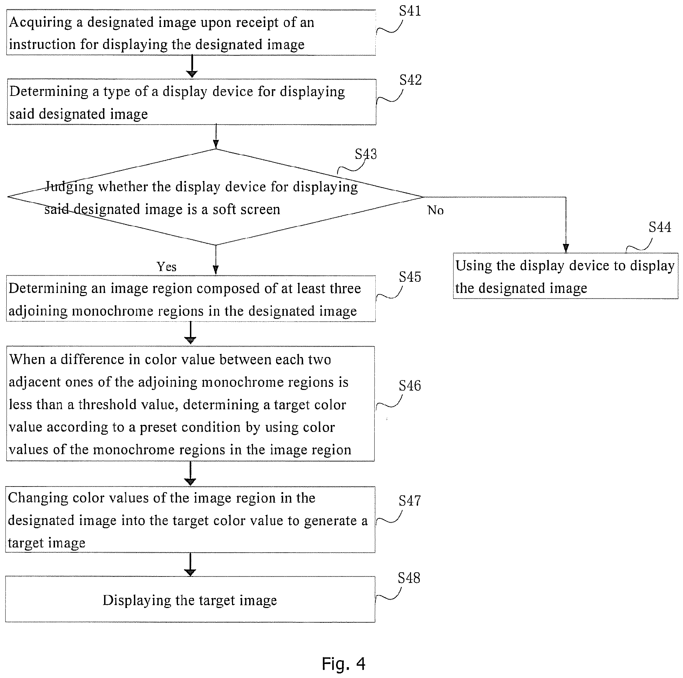

Fig. 4 is a flowchart showing an image displaying method according to an exemplary embodiment of the present invention. The method as shown in Fig. 4 is applicable to a smart device (i.e. may be implemented by a smart device). The embodiment shown in Fig. 4 is a variant of the method illustrated in Fig. 1. For the same part of Fig. 4 as that of Fig. 1, description and explanation of the method illustrated in Fig. 1 can be referred to. The method shown in Fig. 4 comprises the following steps.

In Step S41, a designated image is acquired upon receipt of an instruction for displaying the designated image.

In step S42, a type of a display device for displaying the designated image is determined.

Owing to poor display performance of some soft screens, when an image is displayed with such a soft screen, similar colors in the image may be displayed as the same color, making regions of similar colors in the image looks unnatural. However, there is no such phenomenon for a hard screen. Therefore, after acquiring the designated image, the smart device determines a type of a display device for displaying the designated images.

In step S43, it is judged whether the display device for displaying the designated image is a soft screen. When the display device for displaying the designated image is a soft screen, step S45 is executed. When the display device for displaying the designated image is not a soft screen, step S44 is executed.

Here, when the smart device judges that the display device for displaying the designated image is a soft screen, it indicates that the soft screen may display similar colors in the image as the same color when displaying the designated image. Accordingly, regions of similar colors in the image look unnatural. To avoid this, it is required to execute step S45. When the smart device judges that the display device for displaying the designated image is not a soft screen, it indicates that the display device will not display similar colors in the image as the same color while displaying the designated image. Accordingly, step S44 can be executed so that the display device directly displays the designated image.

In step S44, the display device is used to display the designated image.

In step S45, an image region composed of at least three adjoining monochrome regions in the designated image is determined.

In step S46, when a difference in color value between each two adjacent ones of the adjoining monochrome regions in the image region is less than a threshold value, a target color value is determined in accordance with a preset scheme by using color values of the monochrome regions in the image region.

In step S47, color values of image region in the designated image are changed into the target color value to generate a target image.

In step S48, the target image is displayed.

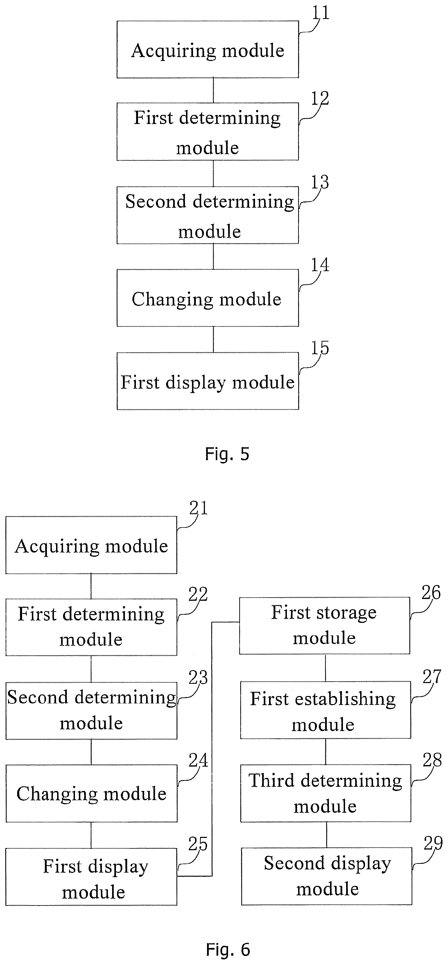

Fig. 5 is the schematic diagram showing an image displaying device not claimed in the present application but helpful for understanding the invention. The image displaying device can prevent sharp change of color from occurring when a poor-performance soft screen displays regions of similar colors in an image. Referring to Fig. 5, the device comprises an acquiring module 11, a first determining module 12, a second determining module 13, a changing module 14 and a first display module 15.

The acquiring module 11 is configured to acquire a designated image upon receipt of an instruction for displaying the designated image.

The first determining module 12 is configured to determine an image region composed of at least three adjoining monochrome regions in said designated image.

The second determining module 13 is configured to determine a target color value in accordance with a preset scheme by using color values of the monochrome regions in said image region, when a difference in color value between each two adjacent ones of the adjoining monochrome regions in said image region is less than a threshold value.

The changing module 14 is configured to change color values of said image region in said designated image into said target color value so as to generate a target image.

The first display module 15 is configured to display said target image.

Fig. 6 is a schematic diagram showing another image displaying device not claimed in the present application but helpful for understanding the invention. The image displaying device can prevent sharp change of color from occurring when a poor-performance soft screen displays regions of similar colors in an image. Referring to Fig. 6, the device comprises an acquiring module 21, a first determining module 22, a second determining module 23, a changing module 24, a first display module 25, a first storage module 26, a first establishing module 27, a third determining module 28 and a second display module 29.

The acquiring module 21 is configured to acquire a designated image upon receipt of an instruction for displaying the designated image.

The first determining module 22 is configured to determine an image region composed of at least three adjoining monochrome regions in said designated image.

The second determining module 23 is configured to determine a target color value in accordance with a preset scheme by using color values of the monochrome region in said image region when a difference in color value between each two adjacent ones of the adjoining monochrome regions in said image region is less than a threshold value.

The changing module 24 is configured to change color values of the image region in the designated image into the target color value so as to generate a target image.

The first display module 25 is configured to display said target image.

The first storage module 26 is configured to store said target image.

The first establishing module 27 is configured to establish a correspondence relation between the designated image and the target image.

The third determining module 28 is configured to determine the target image corresponding to the designated image based on the correspondence relation between the designated image and the target image upon receipt of an instruction for displaying the designated image.

The second display module 29 is configured to display the target image.

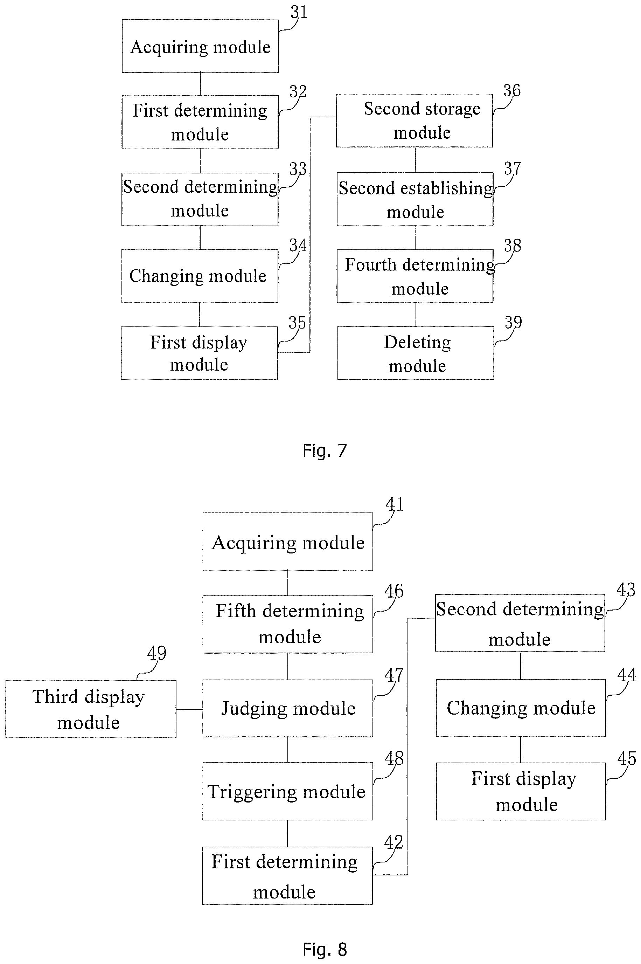

Fig. 7 is a schematic diagram showing a further image displaying device not claimed in the present application but helpful for understanding the invention. The image displaying device prevents sharp change of color from occurring when a poor-performance soft screen displays regions of similar colors in an image. Referring to Fig. 7, the device comprises an acquiring module 31, a first determining module 32, a second determining module 33, a changing module 34, a first display module 35, a second storage module 36, a second establishing module 37, a fourth determining module 38 and a deletion module 39.

The acquiring module 31 is configured to acquire a designated image upon receipt of an instruction for displaying the designated image.

The first determining module 32 is configured to determine an image region composed of at least three adjoining monochrome regions in the designated image.

The second determining module 33 is configured to determine a target color value in accordance with a preset scheme by using color values of the monochrome regions in the image region when a difference in color value between each two adjacent ones of the adjoining monochrome regions in the image region is less than a threshold value.

The changing module 34 is configured to change color values of the image region in the designated image into the target color value so as to generate a target image.

The first display module 35 is configured to display the target image.

The second storage module 36 is configured to store the target image.

The second establishing module 37 is configured to establish a correspondence relation between the designated image and the target image.

The fourth determining module 38 is configured to determine the target image corresponding to the designated image based on the correspondence relation between the designated image and the target image upon receipt of an instruction for deleting the designated image.

The deletion module 39 is configured to delete the designated image and the target image.

Fig. 8 is a schematic diagram showing an image displaying device according to an exemplary embodiment. The image displaying device according to the present invention prevents sharp change of color from occurring when a poor-performance soft screen displays regions of similar colors in an image. Referring to Fig. 8, the device comprises an acquiring module 41, a first determining module 42, a second determining module 43, a changing module 44, a first display module 45, a fifth determining module 46, a judging module 47, a triggering module 48 and a third display module 49.

The acquiring module 41 is configured to acquire a designated image upon receipt of an instruction for displaying the designated image.

The first determining module 42 is configured to determine an image region composed of at least three adjoining monochrome regions in the designated image.

The second determining module 43 is configured to determine a target color value in accordance with a preset scheme by using color values of the monochrome regions in the image region when a difference in color value between each two adjacent ones of the adjoining monochrome regions in the image region is less than a threshold value.

The changing module 44 is configured to change color values of the image region in the designated image into the target color value so as to generate a target image.

The first display module 45 is configured to display the target image.

The fifth determining module 46 is configured to determine a type of a display device for displaying said designated image

The judging module 47 is configured to judge whether the display device for displaying said designated image is a soft screen.

The triggering module 48 is configured to trigger the first determining module 42 when the display device for displaying the designated image is a soft screen.

The third display module 49 is configured to display the designated image by using the display device when the display device for displaying the designated image is not a soft screen.

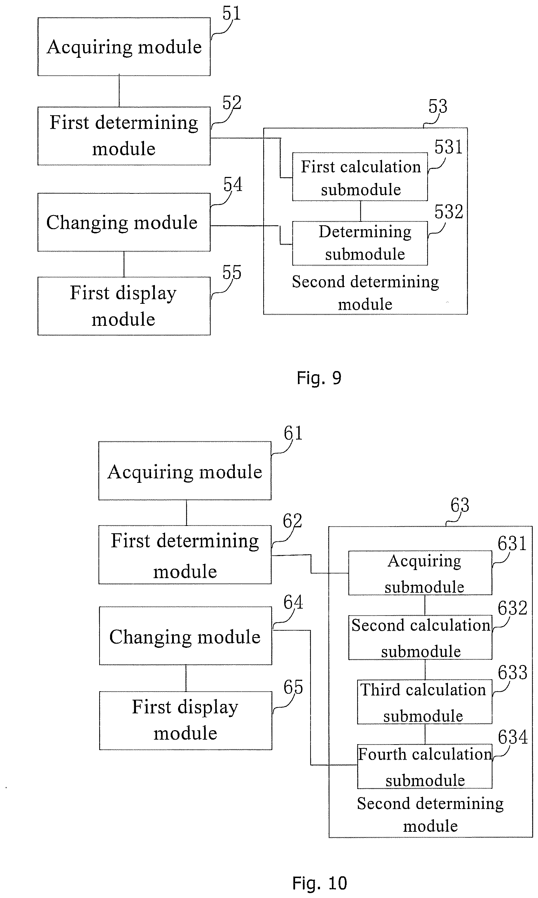

Fig. 9 is a schematic diagram showing a further image displaying device not claimed in the present application but helpful for understanding the invention. The image displaying device prevents sharp change of color from occurring when a poor-performance soft screen displays regions of similar colors in an image. Referring to Fig. 9, the device comprises an acquiring module 51, a first determining module 52, a second determining module 53, a changing module 54, and a first display module 55. The second determining module 53 includes a first calculation submodule 531 and a determining submodule 532.

The acquiring module 51 is configured to acquire a designated image upon receipt of an instruction for displaying the designated image.

The first determining module 52 is configured to determine an image region composed of at least three adjoining monochrome regions in the designated image.

The second determining module 53 is configured to determine a target color value in accordance with a preset scheme by using color values of the monochrome regions in the image region when a difference in color values between each two adjacent ones of the adjoining monochrome regions in the image region is less than a threshold value.

The changing module 54 is configured to change color values of the image region of the designated image into the target color value so as to generate a target image.

The first display module 55 is configured to display the target image.

The first calculation submodule 531 is configured to calculate an average value of the color values of the monochrome regions in the image region.

The determining submodule 532 is configured to determine said average value as the target color value.

Fig. 10 is a schematic diagram showing a further image displaying device not claimed in the present application but helpful for understanding the invention. The image displaying device prevents sharp change of color from occurring when a poor-performance soft screen displays regions of similar colors in an image. Referring to Fig. 10, the device comprises an acquiring module 61, a first determining module 62, a second determining module 63, a changing module 64, a first display module 65. The second determining module 63 includes an acquiring submodule 631, a second calculation submodule 632, a third calculation submodule 633 and a fourth calculation submodule 634.

The acquiring module 61 is configured to acquire a designated image upon receipt of an instruction for displaying the designated image.

The first determining module 62 is configured to determine an image region composed of at least three adjoining monochrome regions in the designated image.

The second determining module 63 is configured to determine a target color value in accordance with a preset scheme by using color values of the monochrome regions in the image region when a difference in color value between each two adjacent ones of the adjoining monochrome regions in the image region is less than a threshold value.

The changing module 64 is configured to change color values of the image region in the designated image into the target color value so as to generate a target image.

The first display module 65 is configured to display the target image.

The acquiring submodule 631 is configured to acquire a maximal color value and a minimal color value in said image region.

The second calculation submodule 632 is configured to calculate a difference between said maximal color value and said minimal color value in said image region as a first color value.

The third calculation submodule 633 is configured to calculate a product of said first color value and a preset coefficient as a second color value.

The fourth calculation submodule 634 is configured to calculate a sum of the minimal color value and the second color value as the target color value.

Specific operations performed by perspective modules in the above device embodiments have been described in detail in corresponding method embodiments, and detailed description thereof is omitted here.

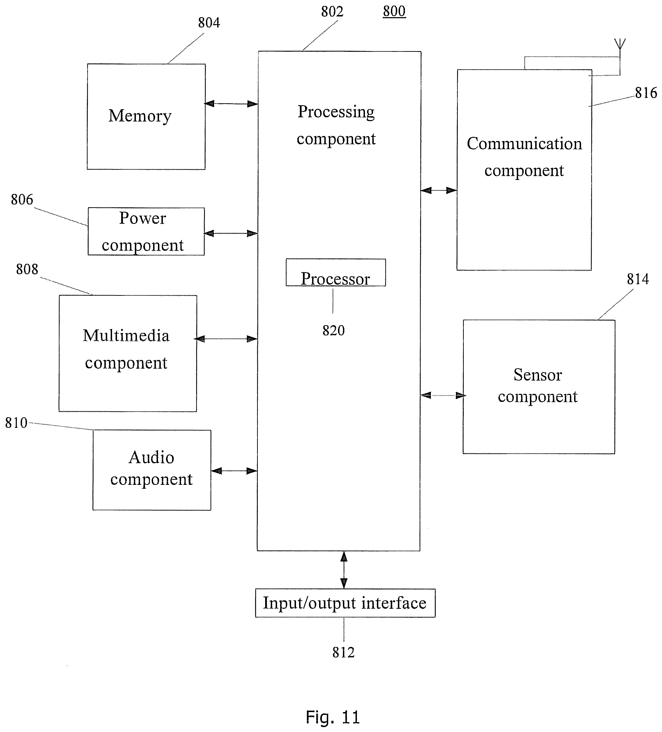

Fig. 11 is a block diagram showing an image displaying device 800 according to an exemplary embodiment. For example, the device 800 may be a mobile phone, a computer, a digital broadcast terminal, a message transceiving device, a game console, a tablet device, a medical equipment, a fitness equipment, a personal digital assistant, and the like.

Referring to Fig. 11, the device 800 may include one or more of the following components: a processing component 802, a memory 804, a power component 806, a multimedia component 808, an audio component 810, an input/output (I/O) interface 812, a sensor component 814 and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, images, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 supplies power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 808 includes a front camera and/or a rear camera. The front camera and the rear camera may receive external multimedia data while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 804 including instructions. The instructions are executable by the processor 820 in the device 800 to perform the above-described methods. For example, the non-transitory computer-readable storage medium may be a ROM, a RAM, a CD-ROM, a magnetic tape, a floppy disc, an optical data storage device, and the like.

When instructions in the storage medium are executed by a processor of a device such as a mobile terminal, the device or mobile terminal is enabled to perform an image displaying method, which comprises: upon receipt of an instruction for displaying a designated image, acquiring said designated image; determining an image region composed of at least three adjoining monochrome regions in said designated image; when a difference in color value between each two adjacent ones of the adjoining monochrome regions is less than a threshold value, determine a target color value in accordance with a preset scheme by using color values of the monochrome regions in said image region; changing color values of said image region in said designated image into said target color value to generate a target image; displaying said target image.

## Claims

1. An image displaying method performed by an image displaying device and comprising:
a step of acquiring (S41) a designated image stored on said device, upon receipt of a first instruction for displaying the designated image;
after acquiring (S41) said designated image,
a step of determining (S42) a type of a display device for displaying said designated image;
a step of judging (S43) whether the display device for displaying said designated image is a soft screen wherein a soft screen is an LCD panel of a type that when it is touched by a hand, a water ripple effect appears on the soft screen;
in the event that it is judged in the judging step that the display device for displaying said designated image is a soft screen (S45), triggering the following steps:
a step of determining (S45) an image region composed of at least three adjoining monochrome regions in the designated image;
when a difference in color value between each two adjacent ones of the adjoining monochrome regions in the image region is less than a threshold value, a step of determining (S46) a target color value according to a preset scheme by using color values of the monochrome regions in the image region;
a step of changing (S47) color values of the image region in the designated image into the target color value to generate a target image; and
a first step of displaying (S48) the target image;
wherein said step of determining (S46) the target color value according to the preset scheme by using the color values of the monochrome regions in the image region comprises either:
(i) calculating an average value of the color values of the monochrome regions in said image region and
determining said average value as the target color value; or
(ii) acquiring a maximal color value and a minimal color value in said image region,
calculating a difference between said maximal color value and said minimal color value in said image region as a first color value,
calculating a product of said first color value and a preset coefficient as a second color value, and
calculating a sum of said minimal color value and said second color value as the target color value.

2. The image displaying method according to claim 1, further comprising
a step of displaying (S44) said designated image by utilizing said display device when the display device for displaying said designated image is not a soft screen.

3. An image displaying device, comprising:
an acquiring module (41) configured to acquire a designated image stored on said image displaying device upon receipt of an instruction for displaying the designated image;
a first determining module (42) configured to determine an image region composed of at least three adjoining monochrome regions in said designated image;
a second determining module (43) configured to determine a target color value in accordance with a preset scheme by using color values of the monochrome regions in said image region, when a difference in color value between each two adjacent ones of the adjoining monochrome regions in said image region is less than a threshold value;
a changing module (44) configured to change color values of said image region in said designated image into said target color value so as to generate a target image; and
a first display module (45) configured to display said target image;
wherein there is further provided:
a fifth determining module (46) configured to determine a type of a display device for displaying said designated image;
a judging module (47) configured to judge whether the display device for displaying said designated image is a soft screen wherein a soft screen is an LCD panel of a type that when it is touched by a hand, a water ripple effect appears on the soft screen; and
a triggering module (48) configured to trigger said first determining module (42), said second determining module, said changing module and said first display module when the display device for displaying said designated image is a soft screen;
and wherein said second determining module (43) comprises either:
(i) a first calculation submodule (521) configured to calculate an average value of the color values of the monochrome regions in said image region, and
a determining submodule (522) configured to determine said average value as the target color value; or
(ii) an acquiring submodule (621) configured to acquire a maximal color value and a minimal color value in said image region,
a second calculation submodule (622) configured to calculate a difference between said maximal color value and said minimal color value in said image region as a first color value,
a third calculation submodule (623) configured to calculate a product of said first color value and a preset coefficient as a second color value, and
a fourth calculation submodule (624) configured to calculate a sum of said minimal color value and said second color value as the target color value.

4. The image displaying device according to claim 3, further comprising:
a third display module (49) configured to use said display device to display said designated image when the display device for displaying said designated image is not a soft screen.

5. A computer program including instructions for executing the steps of an image displaying method according to claim 1 or 2 when said program is executed by a computer.

6. A recording medium readable by a computer and having recorded thereon a computer program including instructions for executing the steps of an image displaying method according to claim 1 or 2.

## Patentansprüche

1. Bildanzeigeverfahren, das von einer Bildanzeigevorrichtung ausgeführt wird und umfasst:
einen Schritt des Erfassens (S41) eines bezeichneten Bildes, das auf der Vorrichtung gespeichert ist, nach Empfang einer ersten Anweisung zum Anzeigen des bezeichneten Bildes,
nach dem Erfassen (S41) des bezeichneten Bildes,
einen Schritt des Bestimmens (S42) eines Typs einer Anzeigevorrichtung zum Anzeigen des bezeichneten Bildes,
einen Schritt des Beurteilens (S43), ob die Anzeigevorrichtung zum Anzeigen des bezeichneten Bilds ein Softscreen ist, wobei ein Softscreen ein Typ eines LCD-Panels ist, auf dem, wenn es von einer Hand berührt wird, ein Wasserkräuseleffekt auf dem Softscreen erscheint,
für den Fall, dass in dem Beurteilungsschritt beurteilt wird, dass die Anzeigevorrichtung zum Anzeigen des bezeichneten Bildes ein Softscreen ist (S45), Auslösen der folgenden Schritte:
einen Schritt des Bestimmens (S45) eines Bildbereichs, der aus mindestens drei angrenzenden monochromen Bereichen in dem bezeichneten Bild besteht,
wenn eine Differenz im Farbwert zwischen jeweils zwei benachbarten der angrenzenden monochromen Bereiche in dem Bildbereich kleiner als ein Schwellenwert ist, einen Schritt des Bestimmens (S46) eines Soll-Farbwerts gemäß einem voreingestellten Schema unter Verwendung von Farbwerten der monochromen Bereiche in dem Bildbereich,
einen Schritt des Änderns (S47) von Farbwerten des Bildbereichs in dem bezeichneten Bild in den Soll-Farbwert, um ein Soll-Bild zu erzeugen, und
einen ersten Schritt des Anzeigens (S48) des Soll-Bildes,
wobei der Schritt des Bestimmens (S46) des Soll-Farbwerts gemäß dem voreingestellten Schema unter Verwendung der Farbwerte der monochromen Bereiche in dem Bildbereich entweder umfasst:
(i) Berechnen eines Durchschnittswerts der Farbwerte der monochromen Bereiche in dem Bildbereich und
Bestimmen des Durchschnittswerts als den Soll-Farbwert, oder
(ii) Erfassen eines maximalen Farbwerts und eines minimalen Farbwerts in dem Bildbereich,
Berechnen einer Differenz zwischen dem maximalen Farbwert und dem minimalen Farbwert in dem Bildbereich als einen ersten Farbwert,
Berechnen eines Produkts aus dem ersten Farbwert und einem voreingestellten Koeffizienten als einen zweiten Farbwert und
Berechnen einer Summe aus dem minimalen Farbwert und dem zweiten Farbwert als den Soll-Farbwert.

2. Bildanzeigeverfahren nach Anspruch 1, ferner umfassend:
einen Schritt des Anzeigens (S44) des bezeichneten Bildes unter Einsatz der Anzeigevorrichtung, wenn die Anzeigevorrichtung zum Anzeigen des bezeichneten Bildes kein Softscreen ist.

3. Bildanzeigevorrichtung, umfassend:
ein Erfassungsmodul (41), das dazu ausgestaltet ist, bei Empfang einer Anweisung zum Anzeigen des bezeichneten Bildes ein bezeichnetes Bild zu erfassen, das auf der Bildanzeigevorrichtung gespeichert ist,
ein erstes Bestimmungsmodul (42), das dazu ausgestaltet ist, einen Bildbereich zu bestimmen, der aus mindestens drei angrenzenden monochromen Bereichen in dem bezeichneten Bild besteht,
ein zweites Bestimmungsmodul (43), das dazu ausgestaltet ist, einen Soll-Farbwert gemäß einem voreingestellten Schema unter Verwendung von Farbwerten der monochromen Bereiche in dem Bildbereich zu bestimmen, wenn eine Differenz im Farbwert zwischen jeweils zwei benachbarten der angrenzenden monochromen Bereiche in dem Bildbereich kleiner als ein Schwellenwert ist,
ein Änderungsmodul (44), das dazu ausgestaltet ist, Farbwerte des Bildbereichs in dem bezeichneten Bild in den Soll-Farbwert zu ändern, um so ein Soll-Bild zu erzeugen, und
ein erstes Anzeigemodul (45), das dazu ausgestaltet ist, das Soll-Bild anzuzeigen,
wobei ferner vorgesehen ist:
ein fünftes Bestimmungsmodul (46), das dazu ausgestaltet ist, einen Typ einer Anzeigevorrichtung zum Anzeigen des bezeichneten Bildes zu bestimmen,
ein Beurteilungsmodul (47), das dazu ausgestaltet ist, zu beurteilen, ob die Anzeigevorrichtung zum Anzeigen des bezeichneten Bilds ein Softscreen ist, wobei ein Softscreen ein Typ eines LCD-Panels ist, auf dem, wenn es von einer Hand berührt wird, ein Wasserkräuseleffekt auf dem Softscreen erscheint, und
ein Auslösemodul (48), das dazu ausgestaltet ist, das erste Bestimmungsmodul (42), das zweite Bestimmungsmodul, das Änderungsmodul und das erste Anzeigemodul auszulösen, wenn die Anzeigevorrichtung zum Anzeigen des bezeichneten Bildes ein Softscreen ist,
und wobei das zweite Bestimmungsmodul (43) umfasst entweder:
(i) ein erstes Berechnungsuntermodul (521), das dazu ausgestaltet ist, einen Durchschnittswert der Farbwerte der monochromen Bereiche in dem Bildbereich zu berechnen, und
ein Bestimmungsuntermodul (522), das dazu ausgestaltet ist, den Durchschnittswert als den Soll-Farbwert zu bestimmen, oder
(ii) ein Erfassungsuntermodul (621), das dazu ausgestaltet ist, einen maximalen Farbwert und einen minimalen Farbwert in dem Bildbereich zu erfassen,
ein zweites Berechnungsuntermodul (622), das dazu ausgestaltet ist, eine Differenz zwischen dem maximalen Farbwert und dem minimalen Farbwert in dem Bildbereich als einen ersten Farbwert zu berechnen,
ein drittes Berechnungsuntermodul (623), das dazu ausgestaltet ist, ein Produkt aus dem ersten Farbwert und einem voreingestellten Koeffizienten als zweiten Farbwert zu berechnen, und
ein viertes Berechnungsuntermodul (624), das dazu ausgestaltet ist, eine Summe aus dem minimalen Farbwert und dem zweiten Farbwert als den Soll-Farbwert zu berechnen.

4. Bildanzeigevorrichtung nach Anspruch 3, ferner umfassend:
ein drittes Anzeigemodul (49), das dazu ausgestaltet ist, die Anzeigevorrichtung zu verwenden, um das bezeichnete Bild anzuzeigen, wenn die Anzeigevorrichtung zum Anzeigen des bezeichneten Bildes kein Softscreen ist.

5. Computerprogramm, das Anweisungen zum Ausführen der Schritte eines Bildanzeigeverfahrens nach Anspruch 1 oder 2 beinhaltet, wenn das Programm von einem Computer ausgeführt wird.

6. Aufzeichnungsmedium, das von einem Computer lesbar ist und auf dem ein Computerprogramm aufgezeichnet ist, das Anweisungen zum Ausführen der Schritte eines Bildanzeigeverfahrens nach Anspruch 1 oder 2 beinhaltet.

## Revendications

1. Procédé d'affichage d'images réalisé par un dispositif d'affichage d'images et comprenant :
une étape d'acquisition (S41) d'une image désignée stockée sur ledit dispositif, à la réception d'une première instruction d'affichage d'image désignée ;
après l'acquisition (S41) de ladite image désignée,
une étape de détermination (S42) d'un type de dispositif d'affichage pour afficher ladite image désignée ;
une étape d'estimation (S43) précisant si le dispositif d'affichage pour afficher ladite image désignée est un écran souple, dans lequel un écran souple est un panneau LCD d'un type tel que, lorsqu'il est touché par une main, un effet d'ondulation d'eau apparaît sur l'écran souple ;
dans le cas où il est estimé à l'étape d'estimation que le dispositif d'affichage pour afficher ladite image désignée est un écran souple (S45), le déclenchement des étapes suivantes :
une étape de détermination (S45) d'une région d'image composée d'au moins trois régions monochromes attenantes dans l'image désignée ;
lorsqu'une différence de valeur de couleur entre chaque deux régions adjacentes des régions monochromes attenantes dans la région d'image est inférieure à une valeur seuil, une étape de détermination (S46) d'une valeur de couleur cible selon un schéma prédéfini en utilisant des valeurs de couleur des régions monochromes dans la région d'image ;
une étape de modification (S47) de valeurs de couleur de la région d'image dans l'image désignée en valeur de couleur cible pour générer une image cible ; et
une première étape d'affichage (S48) de l'image cible ;
dans lequel ladite étape de détermination (S46) de la valeur de couleur cible selon le schéma prédéfini en utilisant les valeurs de couleur des régions monochromes dans la région d'image comprend soit :
(i) le calcul d'une valeur moyenne des valeurs de couleur des régions monochromes dans ladite région d'image, et
la détermination de ladite valeur moyenne en tant que valeur de couleur cible ; ou
(ii) l'acquisition d'une valeur de couleur maximale et d'une valeur de couleur minimale dans ladite région d'image,
le calcul d'une différence entre ladite valeur de couleur maximale et ladite valeur de couleur minimale dans ladite région d'image en tant que première valeur de couleur,
le calcul d'un produit de ladite première valeur de couleur et d'un coefficient prédéfini en tant que deuxième valeur de couleur, et
le calcul d'une somme de ladite valeur de couleur minimale et de ladite deuxième valeur de couleur en tant que valeur de couleur cible.

2. Procédé d'affichage d'images selon la revendication 1, comprenant en outre
une étape d'affichage (S44) de ladite image désignée en utilisant ledit dispositif d'affichage lorsque le dispositif d'affichage pour afficher ladite image désignée n'est pas un écran souple.

3. Dispositif d'affichage d'images, comprenant :
un module d'acquisition (41) configuré pour acquérir une image désignée stockée sur ledit dispositif d'affichage d'images à la réception d'une instruction d'affichage d'image désignée ;
un premier module de détermination (42) configuré pour déterminer une région d'image composée d'au moins trois régions monochromes attenantes dans ladite image désignée ;
un deuxième module de détermination (43) configuré pour déterminer une valeur de couleur cible conformément à un schéma prédéfini en utilisant des valeurs de couleur des régions monochromes dans ladite région d'image, lorsqu'une différence de valeur de couleur entre chaque deux régions adjacentes des régions monochromes attenantes dans ladite région d'image est inférieure à une valeur seuil ;
un module de modification (44) configuré pour modifier des valeurs de couleur de ladite région d'image dans ladite image désignée en ladite valeur de couleur cible de manière à générer une image cible ; et
un premier module d'affichage (45) configuré pour afficher ladite image cible ;
dans lequel il est en outre prévu :
un cinquième module de détermination (46) configuré pour déterminer un type de dispositif d'affichage pour afficher ladite image désignée ;
un module d'estimation (47) configuré pour estimer si le dispositif d'affichage pour afficher ladite image désignée est un écran souple dans lequel un écran souple est un panneau LCD d'un type tel que, lorsqu'il est touché par une main, un effet d'ondulation d'eau apparaît sur l'écran souple ; et
un module de déclenchement (48) configuré pour déclencher ledit premier module de détermination (42), ledit deuxième module de détermination, ledit module de modification et ledit premier module d'affichage lorsque le dispositif d'affichage pour afficher ladite image désignée est un écran souple ;
et dans lequel ledit deuxième module de détermination (43) comprend soit :
(i) un premier sous-module de calcul (521) configuré pour calculer une valeur moyenne des valeurs de couleur des régions monochromes dans ladite région d'image, et
un sous-module de détermination (522) configuré pour déterminer ladite valeur moyenne en tant que valeur de couleur cible ; ou
(ii) un sous-module d'acquisition (621) configuré pour acquérir une valeur de couleur maximale et une valeur de couleur minimale dans ladite région d'image,
un deuxième sous-module de calcul (622) configuré pour calculer une différence entre ladite valeur de couleur maximale et ladite valeur de couleur minimale dans ladite région d'image en tant que première valeur de couleur,
un troisième sous-module de calcul (623) configuré pour calculer un produit de ladite première valeur de couleur et un coefficient prédéfini en tant que deuxième valeur de couleur, et
un quatrième sous-module de calcul (624) configuré pour calculer une somme de ladite valeur de couleur minimale et de ladite deuxième valeur de couleur en tant que valeur de couleur cible.

4. Dispositif d'affichage d'images selon la revendication 3, comprenant en outre :
un troisième module d'affichage (49) configuré pour utiliser ledit dispositif d'affichage afin d'afficher ladite image désignée lorsque le dispositif d'affichage pour afficher ladite image désignée n'est pas un écran souple.

5. Programme informatique comportant des instructions pour exécuter les étapes d'un procédé d'affichage d'images selon la revendication 1 ou 2 lorsque ledit programme est exécuté par un ordinateur.

6. Support d'enregistrement lisible par un ordinateur sur lequel est enregistré un programme informatique comportant des instructions pour exécuter les étapes d'un procédé d'affichage d'images selon la revendication 1 ou 2.
